# EUROPEAN PATENT APPLICATION

(11) **EP 2 085 202 A2**
(43) Date of publication of application: **05.08.2009**
(21) Application number: 08160057.9
(22) Date of filing: 10.07.2008
(51) Int. Cl.: B29C 44/30, E06B 9/17

(54) **Sheet-like elements, particularly for manufacturing casings for roll-up units, and associated manufacturing method and apparatus**

(30) Priority: 31.01.2008 IT VR20080010
(71) Applicant: Roverplastik S.P.A., 38060 Volano (TN) (IT)
(72) Inventor: Guardini, Aldo, 38100, Trento (IT)
(74) Representative: Modiano, Micaela Nadia

(57) **Abstract**

A sheet-like element (1), particularly suitable for the manufacture of casings for roll-up units, comprising a body (2) made of expanded polymeric material which incorporates completion material (3).

## Description

The present invention relates to a sheet-like element, particularly suitable for manufacturing casings for roll-up units with improved thermal and acoustic properties, and to the associated manufacturing method and apparatus.

Currently, the most widely used technology for the manufacture of casings for roll-up units entails manufacturing discontinuously, by using molds, substantially U-shaped bars which are subsequently cut to size so as to obtain the casing in practice in a single pass.

Generally such bars are constituted by expanded polystyrene or expanded polyurethane within which it is possible to incorporate, for example, expanded clay.

As an alternative to the production of casings in a mold, methods are known which provide for the manufacture, in line and continuously, of panels of expanded material, typically polystyrene (PS) or polyurethane (PU).

In this case the panels can be provided respectively by extrusion or by means of a continuous foaming process with subsequent calendering and rolling, so as to obtain a longitudinally elongated sheet-like element which is then cut transversely and associated with other sheet-like elements in order to provide the finished casing.

Lines for the production of polyurethane (PU) panels, as mentioned, provide for the deposition of the components (polymers) at a foaming unit proximate to which the reaction among the several components and the expansion of the final compound occur.

Generally, downstream of the foaming unit, there is provided a unit for calendering and rolling the panel which can provide, as mentioned, the passage through one or more calendering and rolling units.

Downstream of the calendering and rolling unit it is therefore possible to provide a unit for cutting the panels to size and a storage unit.

The panels thus obtained can be subsequently cut and assembled in a plurality of parts so as to obtain the casings.

Although the production of casings in a mold allows to obtain, with a single operation, the already-finished casing structure, the continuous production of panels and their subsequent assembly allow to achieve higher productivity of the plant as well as an obvious higher degree of automation.

The aim of the present invention is to provide a sheet-like element with improved properties which is particularly suitable for manufacturing casings for roll-up units, and the corresponding method and apparatus for continuous production.

This aim and these and other objects, which will become better apparent hereinafter, are achieved by a sheet-like element, particularly suitable for manufacturing casings for roll-up units, characterized in that it comprises a matrix made of expanded polymeric material which incorporates a completion material.

According to another aspect, the present invention provides a method for manufacturing sheet-like elements, particularly for manufacturing casings for roll-up units, characterized in that it comprises the following steps:
- a step for depositing a completion material along a production line;
- a step for depositing, along said production line, one or more polymeric components which are adapted to react in order to obtain an expanded polymeric material which incorporates said completion material;
- a step for the expansion, calendering, rolling and curing of said expanded polymeric material which incorporates said completion material.

According to a further aspect, the invention relates to an apparatus for manufacturing sheet-like elements, particularly for manufacturing casings for roll-up units, characterized in that it comprises, along a line for the production of sheet-like elements:
- a unit for depositing a completion material;
- downstream of said unit for deposition of a completion material, a unit for depositing at least two polymeric components which are adapted to react with each other in order to obtain an expanded polymeric material which incorporates said completion material;
- downstream of said unit for depositing at least two polymeric components, an area for expansion, calendering and rolling, in which said polymeric material expands and cures, incorporating said completion material;
- downstream of said area for expansion, calendering and rolling, a unit for cutting and conditioning said sheet-like element thus obtained.

Further characteristics and advantages of the invention will become better apparent from the description of some preferred but not exclusive embodiments of a sheet-like element and of the corresponding production apparatus, illustrated by way of non-limiting example in the accompanying drawings, wherein:
Figure 1 is a simplified construction diagram of the apparatus according to the invention;
Figure 2 is a perspective view of the sheet-like element according to the invention;
Figures 3 and 4 are perspective views of two particular uses of the sheet-like element according to the present invention.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

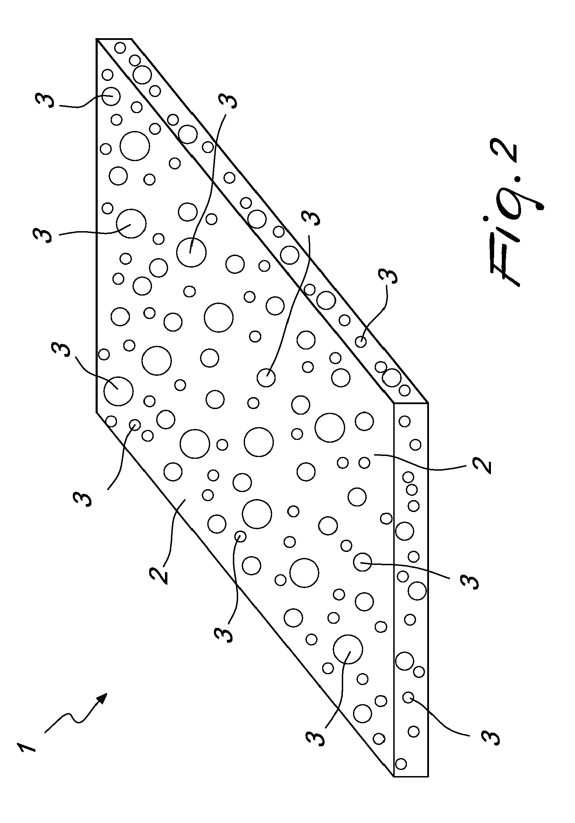

With reference to Figure 2, a sheet-like element, particularly suitable for the manufacture of casings for roll-up units with improved thermal and acoustic properties, generally designated by the reference numeral 1, comprises a body 2 made of expanded polymeric material which incorporates a completion material 3.

In particular, the completion material is selected in the group that comprises:
- expanded clay;
- cellular glass;
- net made of plastics or other material;
- reinforcement fillers;
- reinforcement fibers;
- membranes or fabrics or films.

The expanded polymeric material is instead selected within the group that comprises:
- expanded polyurethane;
- polystyrene.

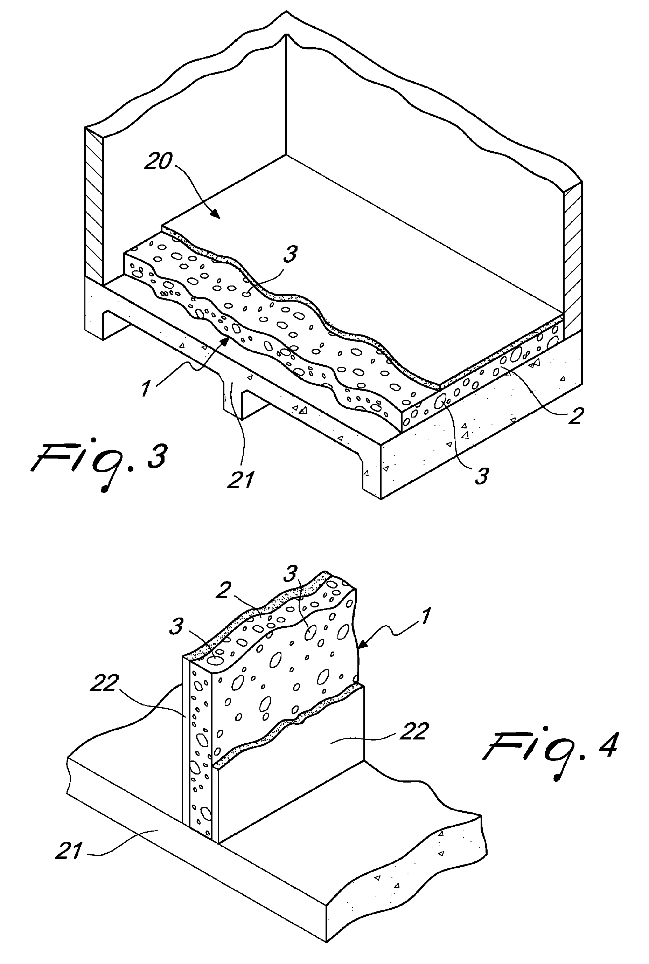

With reference to Figure 3, it is possible to use the sheet-like element 1 to provide lightweight and insulating foundations of flooring 20. In practice it is possible to lay directly, instead of the mix of cement and clay that is normally used, the sheet-like elements 1 according to the invention over a floor slab 21 and then lay the flooring 20 over the sheet-like elements 1.

It has been found that this solution allows to obtain, besides a high thermal insulation, a satisfactory acoustic insulation, which cannot be obtained with normal mixes, in addition to an obvious reduction in laying times, since it is not necessary to wait for the drying and setting of the concrete paste which incorporates the clay.

With reference to Figure 4, it is possible to use the sheet-like element 1 also to provide partition walls or insulating panels.

In this case also, high thermal and acoustic insulation is ensured and installation times are extremely short.

It is of course possible to subsequently cover the surface of the sheet-like elements 1 with plaster 22, so as to ensure an optimum finish of the manufactured article.

If sheet-like elements 1 are used to provide lightweight and insulating foundations of floorings 20, it is possible to provide coupling with sheaths, advantageously made of plastics, which in this case can be coupled in line during the process for manufacturing the sheet-like element 1 itself, with an obvious saving in terms of time and costs.

According to another aspect, the present invention relates to a method for manufacturing sheet-like elements, particularly for manufacturing casings for roll-up units, characterized in that it comprises the following steps:
- a step for deposition, along a production line, of a completion material;
- a step for deposition, along the production line, of at least two polymeric components which are adapted to react with each other in order to obtain an expanded polymeric material which incorporates said completion material;
- a step for calendering and rolling and curing said expanded polymeric material which incorporates said completion material.

Advantageously, the method provides, after the curing step, a step for calendering and rolling, which is adapted to obtain a continuous sheet-like element which has preset dimensions.

Conveniently, after the calendering and rolling step, it is possible to provide a step for cutting and assembling the sheet-like elements in order to obtain at least one portion of a casing for roll-up units.

As mentioned earlier, the completion material can be selected within the group that comprises:
- expanded clay;
- cellular glass;
- net made of plastics or other material;
- reinforcement fillers;
- reinforcement fibers;
- membranes or fabrics or films.

As regards instead the expanded polymeric material, it is selected in the group that comprises:
- expanded polyurethane;
- polystyrene.

Advantageously, it is possible to provide a step for coupling the sheet-like element 1 with an insulation sheath, for example made of plastics.

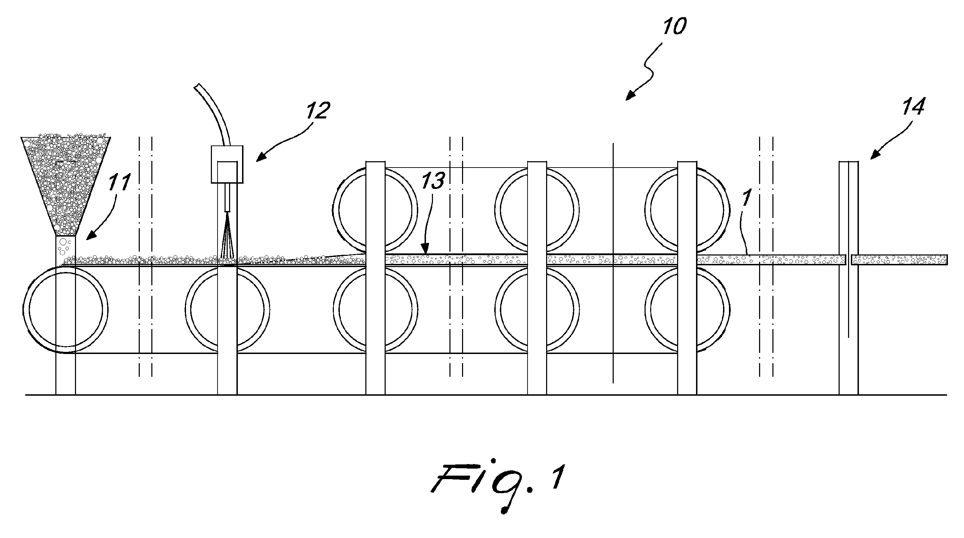

As regards the sequence of the steps of the method according to the invention, it is evident that it is possible to provide, as shown in Figure 1, for the step of deposition along a production line of a completion material to be followed by the step of deposition, along the production line, of at least two polymeric components which are adapted to react with each other to obtain an expanded polymeric material which incorporates the completion material, but such steps can also be reversed. In this last case, the step of deposition, along the production line, of at least two polymeric components which are adapted to react with each other to obtain an expanded polymeric material which incorporates the completion material precedes the step of deposition, along the production line, of a completion material.

Finally, the invention relates to an apparatus for manufacturing sheet-like elements, particularly for manufacturing casings for roll-up units, characterized in that it comprises, along a line 10 for the production of sheet-like elements 1:
- a unit 11 for depositing a completion material 3;
- downstream of the unit for depositing a completion material 11, a unit for depositing one or more polymeric components 12, which are adapted to react with each other in order to obtain an expanded polymeric material which incorporates said completion material;
- downstream of the unit for depositing one or more polymeric components, a region for the expansion, calendering and rolling and curing 13 of said expanded polymeric material which incorporates the completion material;
- downstream of the region for expansion, calendering and rolling and curing 13, a unit 14 for cutting the sheet-like element 1.

In practice it has been found that the invention has achieved the intended aim and objects in all of its embodiments.

In practice, the materials used, as well as the contingent shapes and dimensions, may be any according to requirements.

All the details may further be replaced with other technically equivalent elements.

The disclosures in Italian Patent Application no. VR2008A000010, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A sheet-like element, particularly suitable for the manufacture of casings for roll-up units, **characterized in that** it comprises a body made of expanded polymeric material which incorporates completion material.

2. The sheet-like element according to claim 1, **characterized in that** said completion material is selected in the group that comprises:
- expanded clay;
- cellular glass;
- net made of plastics or other materials;
- reinforcement fillers;
- reinforcement fibers;
- membranes or fabrics or films.

3. The sheet-like element according to one or more of the preceding claims, **characterized in that** said expanded polymeric material is selected within the group that comprises:
- expanded polyurethane;
- polystyrene.

4. The sheet-like element according to one or more of the preceding claims, **characterized in that** it comprises, at at least one portion of one of its faces, an insulation sheath made of plastics.

5. A method for manufacturing sheet-like elements, particularly for manufacturing casings for roll-up units, **characterized in that** it comprises the following steps:
- a step for deposition, along a production line, of a completion material;
- a step for deposition, along said production line, of at least two polymeric components which are adapted to react with each other in order to obtain an expanded polymeric material which incorporates said completion material;
- a step for expansion and curing said expanded polymeric material which incorporates said completion material.

6. The method according to claim 5, **characterized in that** it provides, after said expansion and curing step, a calendering and rolling step which is suitable to obtain a continuous sheet-like element which has preset dimensions.

7. The method according to one or more of claims 5 and 6, **characterized in that** it comprises, after said calendering and rolling step, a step for cutting and assembling said sheet-like elements to obtain at least one portion of a casing for roll-up units.

8. The method according to one or more of claims 5 to 7, **characterized in that** said completion material is selected within the group that comprises:
- expanded clay;
- net made of plastics;
- reinforcement fillers.

9. The method according to one or more of claims 5 to 8, **characterized in that** said expanded polymeric material is selected within the group that comprises:
- expanded polyurethane;
- polystyrene.

10. An apparatus for manufacturing sheet-like elements, particularly for manufacturing casings for roll-up units, **characterized in that** it comprises, along a line for the production of sheet-like elements:
- a unit for depositing a completion material;
- downstream of said unit for depositing a completion material, a unit for depositing at least two polymeric components which are adapted to react with each other in order to obtain an expanded polymeric material which incorporates said completion material;
- downstream of said unit for depositing at least two polymeric components, an expansion, calendering and rolling and curing region for said expanded polymeric material which incorporates said completion material;
- downstream of said expansion, calendering and rolling and curing region, a unit for cutting and conditioning said sheet-like element.

11. The use of a sheet-like element according to one or more of the preceding claims to provide flooring foundations.

12. The use of a sheet-like element according to one or more of the preceding claims to provide partition walls or insulating panels.
